# EUROPEAN PATENT APPLICATION

(11) **EP 4 475 324 A1**
(43) Date of publication of application: **11.12.2024**
(21) Application number: 23747038.0
(22) Date of filing: 26.01.2023
(51) Int. Cl.: H01M 50/507, H01G 11/10, H01M 50/209, H01M 50/213, H01M 50/503, H01M 50/509, H01M 50/55, H01M 50/588, H01M 50/593

(54) **ELECTRIC POWER STORAGE MODULE**

(30) Priority: 31.01.2022 JP 2022013727
(71) Applicant: Panasonic Intellectual Property Management Co., Ltd., Kadoma-shi, Osaka 571-0057 (JP)
(72) Inventor: NAGATA, Keisuke, Kadoma-shi, Osaka 571-0057 (JP); MURATSU, Jiro, Kadoma-shi, Osaka 571-0057 (JP); TAKASAKI, Hiroshi, Kadoma-shi, Osaka 571-0057 (JP); HIRANO, Tatsuya, Kadoma-shi, Osaka 571-0057 (JP)
(74) Representative: Novagraaf International SA
(86) International application number: PCT/JP2023/002462
(87) International publication number: WO 2023/145828

(57) **Abstract**

A battery module includes a plurality of batteries, current collector plates each connecting the plurality of batteries, and an upper holder including a part disposed between the plurality of batteries and the current collector plates. The plurality of batteries is arranged in a direction orthogonal to the height direction of the batteries. The upper holder includes a plurality of inclined surface parts which is inclined with respect to the arrangement direction and on which the current collector plate is mounted. A plurality of inclined surface parts is disposed in a row.

## Description

### Technical Field

The present disclosure relates to an electric power storage module including an insulating member holding current collector plates.

### Background Art

Conventionally, Patent Literature 1 describes one example of battery module 201. As shown in FIG. 12, this battery module includes a battery holder (not shown) for holding a plurality of batteries 205, and a plurality of current collector plates 251. The battery holder includes a current collector plate mounting surface orthogonal to the height direction of batteries 205. Furthermore, each current collector plate 251 includes first flat plate part 261 and second flat plate part 263 connected to flat plate part 261 via stepped part 262. Current collector plate 251 is produced by bending a sheet metal. First flat plate part 261 constitutes a lower layer closer to batteries 205, and second flat plate part 263 constitutes an upper layer part being more distant from batteries 205 than first flat plate part 261. Two adjacent current collector plates 251 are disposed such that first flat plate part 261 of one current collector plate 251 and second flat plate part 263 of the other current collector plate 251 overlap in the thickness direction. Insulating member 267 is disposed between first flat plate part 261 and second flat plate part 263. To first flat plate part 261, corresponding negative electrodes of the plurality of batteries 205, connected in parallel, are electrically connected. To second flat plate part 263 that overlaps first flat plate part 261, corresponding positive electrodes of the plurality of batteries 205 are electrically connected. In current collecting structure 250, a plurality of batteries thus parallelly connected batteries is connected in series.

### Citation List

### Patent Literature

[PTL 1] US Patent No. 9,490,465

### SUMMARY OF THE INVENTION

In battery module 201 above, since each current collector plate 251 includes first plate part 261 and second plate part 263 coupled to each other via stepped part 262, and is produced by bending a sheet metal, the tolerance of current collector plate 251 easily increases, which makes it difficult to produce current collecting structure 250 at high accuracy. Accordingly, an object of the present disclosure is to provide an electric power storage module capable of suppressing tolerance.

An electric power storage module according to the present disclosure includes a plurality of electric power storage devices, current collector plates each connecting the plurality of electric power storage devices, and an insulating member including a part disposed between the plurality of electric power storage devices and the current collector plates. The plurality of electric power storage devices is arranged in a direction orthogonal to the heigh direction of the electric power storage devices. The insulating member includes a plurality of inclined surface parts which is inclined with respect to the direction of arrangement and on which the current collector plates are mounted, and a plurality of inclined surface parts is disposed in a row.

The electric power storage module of the present disclosure can suppress the tolerance.

### BRIEF DESCRIPTION OF THE DRAWINGS

FIG. 1 is a perspective view of a battery module in accordance with one exemplary embodiment of the present disclosure.
FIG. 2 is an exploded perspective view of the battery module.
FIG. 3 is a perspective view of a current collecting structure showing current collector plates in which a part located below the other current collector plate is indicated by a dotted line.
FIG. 4 is a plan view seen from the height direction of a current collecting structure showing current collector plates in which a part located below the other current collector plate is indicated by a dotted line.
FIG. 5 is a plan view of the battery module seen from an upper side in the height direction.
FIG. 6 is a sectional view taken along line A-A of FIG. 5, and is an enlarged sectional view of the periphery of a current collector plate mounting surface on an upper holder in the battery module.
FIG. 7 is a perspective view showing a part of a side where the current collector plates are mounted in the upper holder.
FIG. 8 is an enlarged perspective view of a part located near one side in the width direction and a part located near a negative electrode in a serial direction in the upper side of the battery module.
FIG. 9 is a schematic sectional view taken along line B-B of FIG. 5.
FIG. 10 is a perspective view of a battery module of a modified example.
FIG. 11 is a plan view of the battery module of a modified example seen from the height direction.

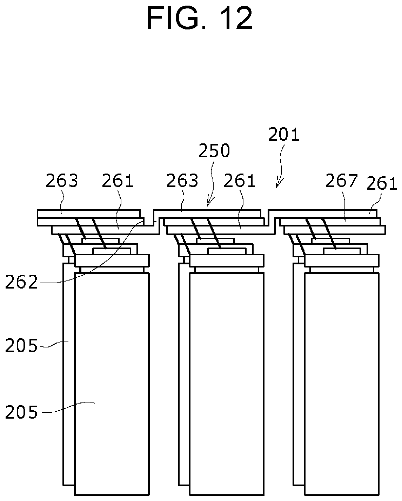

FIG. 12 is a schematic sectional view corresponding to FIG. 9 in a conventional technology.

### DESCRIPTION OF EMBODIMENT

Hereinafter, exemplary embodiments according to the present disclosure are described in detail with reference to attached drawings. Note here that in the following, when a plurality of exemplary embodiments or modified examples are included, it is assumed from the beginning that the features thereof will be appropriately combined to construct a new exemplary embodiment. Furthermore, in the following exemplary embodiments, the same reference numerals are given to the same configurations in the drawings, and redundant explanations are omitted. Furthermore, a plurality of drawings includes schematic views, and the dimensional ratios of length, width, height, and the like, of each member do not necessarily match in different drawings. Furthermore, among the constituent elements described below, constituent elements that are not described in independent claims indicating the highest concept are optional constituent elements and are not essential constituent elements. Note here that in the following description and drawings, a height direction is a height direction of a battery housing part of an upper holder, which coincides with a height direction of a battery housed in the battery housing part.

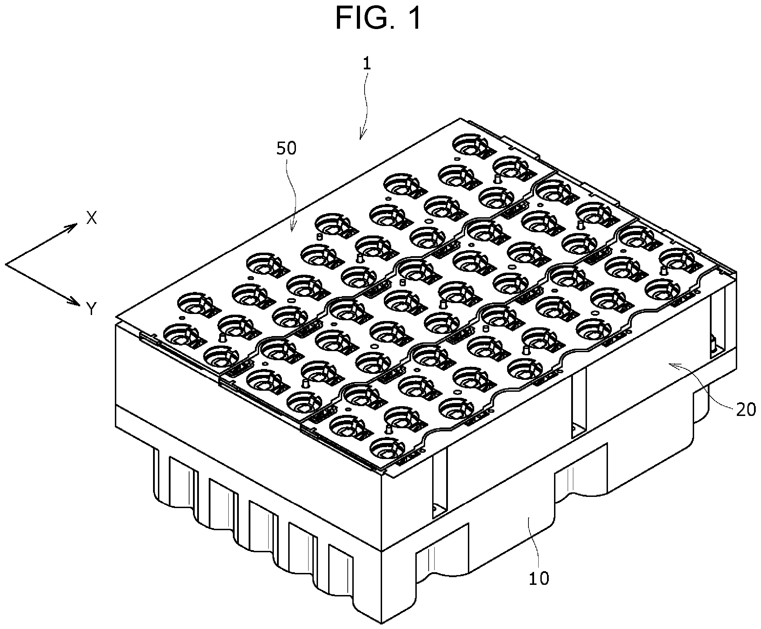

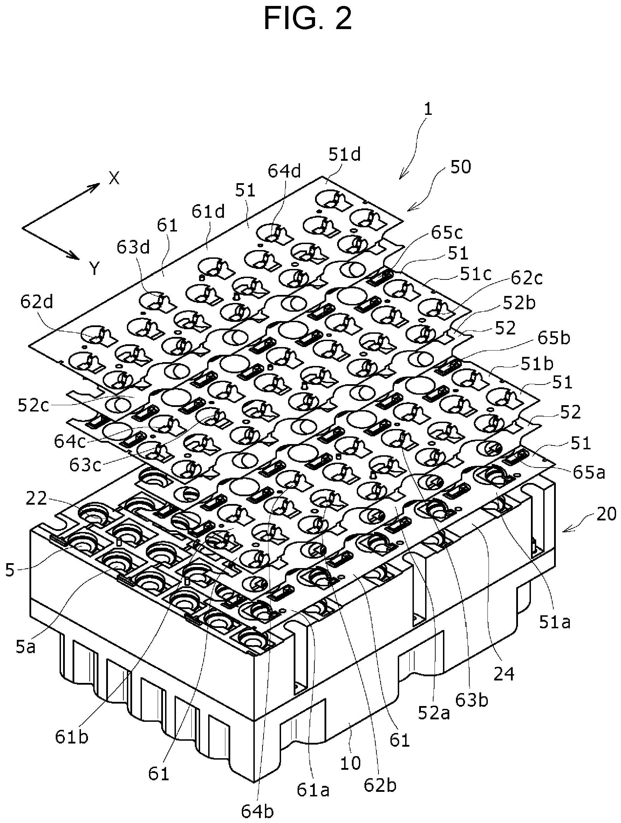

FIG. 1 is a perspective view of battery module 1 in accordance with one exemplary embodiment of the present disclosure; FIG. 2 is an exploded perspective view of battery module 1. Hereinafter, among electric power storage modules of the present disclosure, battery module 1 using a lithium-ion secondary battery (battery 5) for an electric power storage device is described as an example. However, the electric power storage module of the present disclosure is not limited thereto. As the electric power storage device, other secondary batteries such as nickel-hydrogen secondary batteries, and capacitors such as electric double layer capacitors and lithium-ion capacitors may be used. As shown in FIG. 1, battery module 1 includes a plurality of batteries 5, lower holder 10, upper holder 20 as an example of the insulating member, and current collecting structure 50. Lower holder 10 is made of insulating material, and includes a plurality of battery housing parts for housing bottom sides of batteries 5. Lower holder 10 is mounted or fixed on the mounting surface of battery module 1. Upper holder 20 is made of insulating material with insulating property. Upper holder 20 and lower holder 10 are made of, for example, heat-resistant resin. Examples of the heat-resistant resin include polycarbonate resin, polyetheretherketone resin, polyphenylene sulfide resin, polyethylene terephthalate resin, and the like.

Current collecting structure 50 includes a plurality of current collector plates 51, and insulating plates 52 whose number is less by one than the number of current collector plates 51. In the example shown in FIG. 2, current collecting structure 50 includes four current collector plates 51, that is, negative electrode current collector plate 51a constituting a negative electrode, two intermediate current collector plates 51b and 51c, and positive electrode current collector plate 51d constituting a positive electrode. Furthermore, current collecting structure 50 includes three insulating plates 52. Each of current collector plates 51a, 51b, 51c, and 51d is made of metal material, and each insulating plate 52 is made of epoxy resin, phenol resin, polycarbonate resin, silicon resin, or the like.

Four current collector plates 51 are in a substantially rectangular planar shape with substantially the same length in the first line direction indicated by arrow X (hereinafter, referred to as an X direction). On the other hand, the length of intermediate current collector plates 51b and 51c in the second line direction indicated by arrow Y (hereinafter, referred to as a Y direction) is longer than the length of negative electrode current collector plate 51a in the Y direction, and is longer than the length of positive electrode current collector plate 51d in the Y direction. In this exemplary embodiment, the X direction coincides with the longitudinal direction of current collector plate 51 (the row direction of battery 5), and the Y direction coincides with the width direction of current collector plate 51 (the direction in which rows of a plurality of batteries 5 are arranged). The X direction and the Y direction are orthogonal to each other. Four current collector plates 51 are disposed in the Y direction in a row. Note here that in the electric power storage module of the present disclosure, the X direction and the Y direction may be opposite.

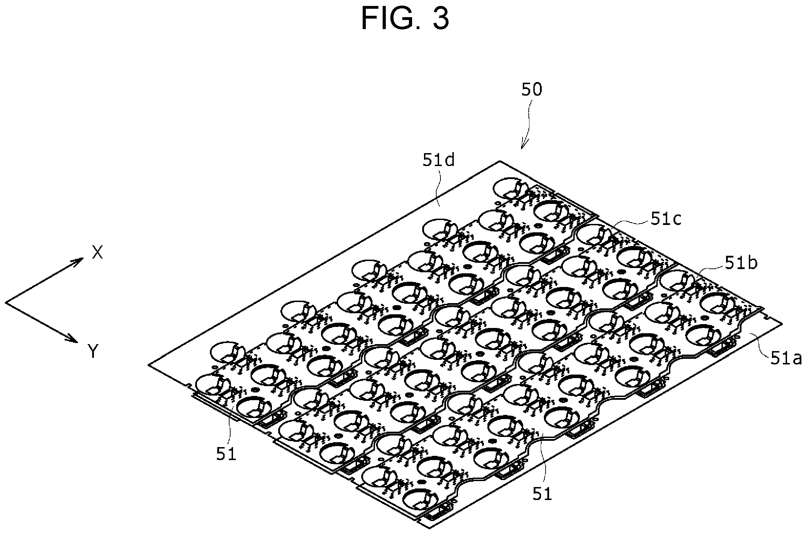

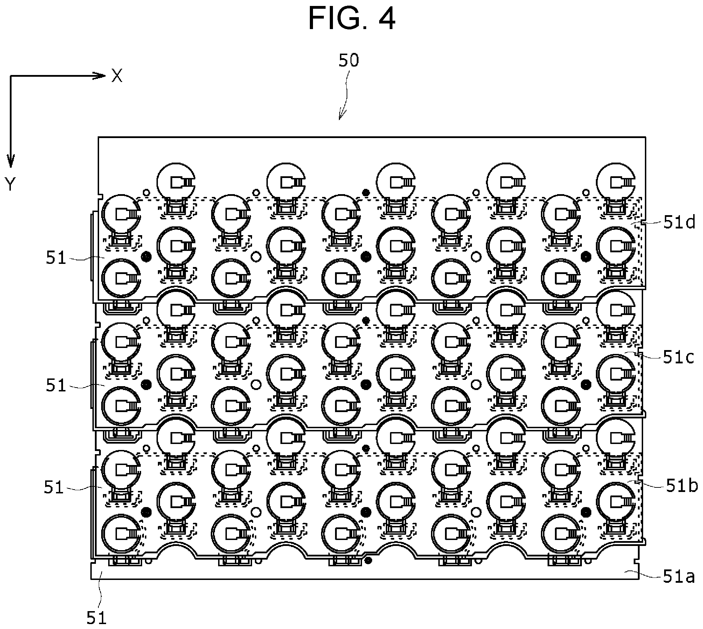

FIG. 3 is a perspective view of current collecting structure 50 showing current collector plate 51 in which a part located below the other current collector plate 51 is indicated by a dotted line; FIG. 4 is a plan view seen from the height direction of current collecting structure 50 showing a current collector plate 51 in which a part located below the other current collector plate 51 is indicated by a dotted line. As shown in FIGs. 3 and 4, as to two current collector plates 51 adjacent to each other in the Y direction, a second end side is more distant than a first end side in the height direction of the power storage devices (batteries 5) in the first current collector plate 51 in the Y direction, and at least a part (the second end side) of first current collector plate 51 (first current collector plate) in the Y direction of second current collector plate 51 in the Y direction overlaps with at least a part (the first end side) of second current collector plate 51 (second current collector plate) in the Y direction. Referring to FIG. 2 again, negative electrode current collector plate 51a is disposed at one end in the Y direction of the surface of upper holder 20 at the side where the current collector is mounted, and the first intermediate current collector plate 51b is laminated on negative electrode current collector plate 51a with first insulating plate 52a interposed therebetween so that a part in the Y direction is located on the negative electrode current collector.

Second intermediate current collector plate 51c is laminated on first intermediate current collector plate 51b via second insulating plate 52b such that a part in the Y direction is located on first intermediate current collector plate 5 1b. Positive electrode current collector plate 5 1d is disposed on the second end part in the Y direction of the surface near a place on which the current collector plate of upper holder 20 is mounted. Positive electrode current collector plate 51d is laminated on second intermediate current collector plate 51c via third insulating plate 52c such that a part in the Y direction is located on second intermediate current collector plate 51c. Four current collector plates 51 and three insulating plates 52 are fixed to upper holder 20 in a state in which they are disposed on the surface near the place on which current collector plate is mounted on upper holder 20. A structure of fixing current collecting structure 50 to upper holder 20 is described later.

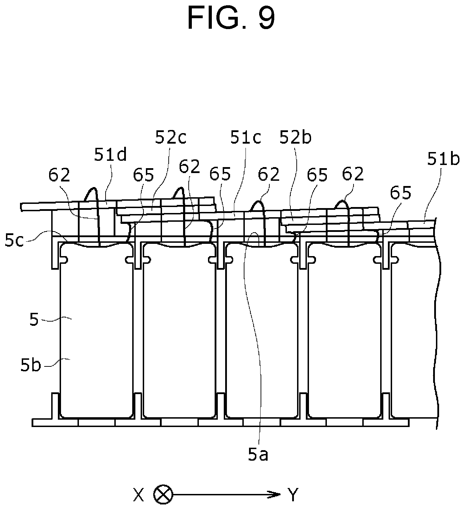

As shown in FIG. 2, upper holder 20 includes a plurality of battery housing parts 22 opened on one side in the height direction, and the sealing plate side of battery 5 is housed in each battery housing part 22. In this exemplary embodiment, battery 5 is, for example, a cylindrical battery. Battery 5 includes an electrode body including a positive electrode and a negative electrode, bottomed cylindrical outer covering can 5b that houses the electrode body and is electrically connected to the negative electrode, and positive electrode terminal 5a as a lid closing the opening of outer covering can 5b and being electrically connected to the positive electrode. Positive electrode terminal 5a closes the opening of outer covering can 5b via an insulating gasket. At the opening of outer covering can 5b, shoulder part 5c is formed by crimping outer covering can 5b inward in the radial direction. Positive electrode terminal 5a is sandwiched and held in the height direction by shoulder part 5c and a groove formed in the side peripheral surface of outer covering can 5b. Note here that in the electric power storage module of the present disclosure, positive electrode terminal 5a may be connected to the negative electrode, and outer covering can 5b may be connected to the positive electrode. A battery may be in the other shapes, for example, a prismatic battery. Battery 5 includes positive electrode terminal 5a (see FIG. 9) in the middle of the axial upper end face, and outer covering can 5b of battery 5 (see FIG. 9) serves as a negative electrode terminal.

Negative electrode current collector plate 51a includes flat-shaped negative electrode current collector main body 61a, and a plurality of negative electrode leads 65a linked to negative electrode current collector main body 61a. The plurality of negative electrode leads 65a is disposed at intervals. Negative electrode lead 65a is formed extending inward from the inner peripheral edge of substantially rectangular through hole. A circular through-hole is formed at a predetermined interval from the through-hole in which a part of the negative electrode lead 65a is formed, and the circular through-hole is a hole into which positive electrode lead 62b is inserted. Negative electrode lead 65a includes a bent part extending from negative electrode current collector main body 61a toward battery housing part 22 in the height direction, and a joint part extending from a tip end of the bent part toward shoulder part 5c (see FIG. 9) of outer covering can 5b of battery 5 and being brought into contact with the upper surface of the shoulder part.

Positive electrode current collector plate 51d includes a flat-shaped positive electrode current collector main body 61d and a plurality of positive electrode leads 62d linked to positive electrode current collector main body 61d. The plurality of positive electrode leads 62d is disposed at intervals from each other. Positive electrode lead 62d is formed to extend from the inner peripheral edge of the through hole to the inside of the through hole. The shape of the opening of the through hole in which positive electrode lead 62d is formed is a combination of a circle and a rectangle. In a circular part, positive electrode lead 62d extends toward battery 5, and in a rectangular part, negative electrode lead 65c of second intermediate current collector plate 51c is exposed. Positive electrode lead 62d includes bent part 63d that extends from positive current collector main body 61d toward battery housing part 22 in the height direction, and joint part 64d extending from the tip end of bent part 63d toward positive electrode terminal 5a of battery 5 and being brought into contact with the upper surface of the positive electrode terminal.

First intermediate current collector plate 51b includes flat-shaped current collector main body 61b, a plurality of positive electrode leads 62b, and a plurality of negative electrode leads 65b. As shown in FIG. 2, the plurality of positive electrode leads 62b is disposed at intervals at the first end side of first intermediate current collector plate 51b in the Y direction, and a plurality of negative electrode leads 65b is disposed at intervals from each other at the second end side in the Y direction of intermediate current collector plate 51b. Positive electrode lead 62b is formed so as to extend toward the inside of the through hole from the inner peripheral edge of the through hole. The shape of the opening of the through hole in which a part of positive electrode lead 62b is formed is a combination of a circular shape and a rectangular shape. In the circular part, positive electrode lead 62b extends to battery 5. In the rectangular part, negative electrode lead 65a of negative electrode current collector plate 51a is exposed. Positive electrode lead 62b includes bent part 63b extending from first current collector main body 61b toward the battery housing part in the height direction, and joint part 64b extended from the tip end of bent part 63b toward the positive electrode terminal in the battery and is brought into contact with the upper surface of the positive electrode terminal. Negative electrode lead 65b is formed extending from the inner peripheral edge to the inside of substantially rectangular through hole. A circular through hole is formed at a predetermined interval from the through hole in which a part of negative electrode leads 65b is formed, and serves as a hole through which positive electrode lead 62c is inserted. Negative electrode lead 65b includes a bent part extending from first current collector main body 61b toward battery housing part 22 in the height direction, and a joint part extending from the tip end of the bent part toward shoulder part 5c of outer covering can 5b of battery 5 and being brought into contact with the upper surface of the shoulder part.

Second intermediate current collector plate 51c includes flat-shaped current collector main body 61c, a plurality of positive electrode leads 62c, and a plurality of negative electrode leads 65c. As shown in FIG. 2, the plurality of positive electrode leads 62c is disposed at intervals on a first end side in the Y direction of second intermediate current collector plate 51c, and the plurality of negative electrode leads 65c is disposed at intervals on a second end side in the Y direction of second intermediate current collector plate 51c. Positive electrode lead 62c extends from the inner peripheral edge of the through hole the same as in positive electrode lead 62b. Positive electrode lead 62c includes bent part 63c extending from second current collector main body 61c toward a battery housing part in the height direction, and joint part 64c extending from the tip end of bent part 63c toward the positive electrode terminal and being brought into contact with the upper surface of the positive electrode terminal. Negative electrode lead 65c, the same as negative electrode lead 65b, extends to the inside from the inner peripheral edge of the substantially rectangular through-hole. A circular through-hole is formed at a predetermined interval from the through-hole in which a part of the negative electrode leads 65b is formed, and serves as a hole through which positive electrode lead 62d is inserted. Negative electrode lead 65c includes a bent part extending from second current collector main body 61c toward the battery housing part in the height direction, and a joint part extending from the tip end of the first bent part toward the shoulder part of the outer covering can of the battery and brought into contact with the upper surface of the shoulder part. Insulating plates 52a, 52b, and 52c are also provided with a hole through which each positive electrode lead or each negative electrode lead is inserted.

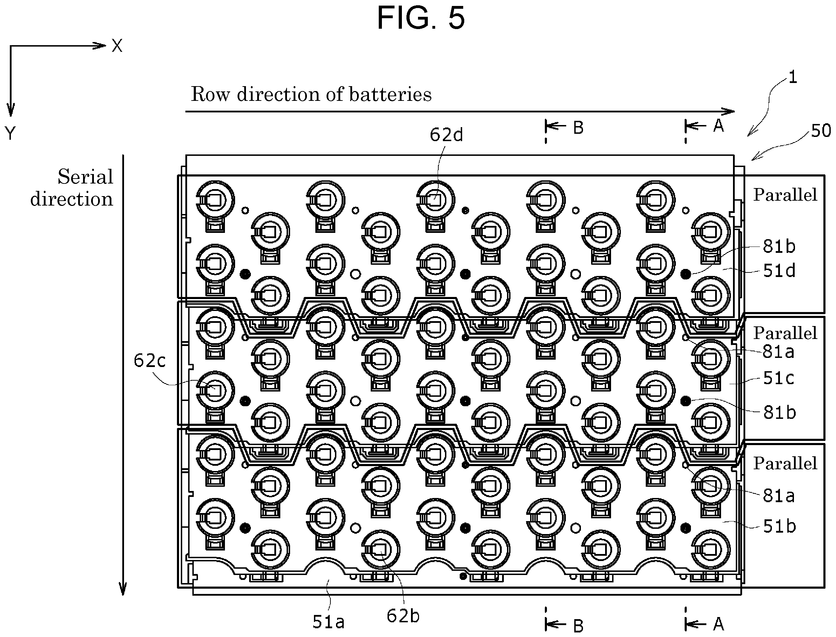

FIG. 5 is a plan view of battery module 1 seen from an upper side in the height direction. In battery module 1, a plurality of batteries 5 is arranged in rows, and batteries 5 in each row are disposed in a staggered manner in the X direction. In the plan view shown in FIG. 5, all positive electrode leads 62b of first intermediate current collector plate 51b, all positive electrode leads 62c of second intermediate current collector plate 51c, and all positive electrode leads 62d of positive electrode current collector plate 51d are visible. In battery module 1 (exposed to the outside of current collecting structure 50), a plurality of batteries 5, electrically connected to positive electrode lead 62b of first intermediate current collector plate 51b, is connected in parallel, and a plurality of batteries 5, electrically connected to positive electrode lead 62c of second intermediate current collector plate 51c, is connected in parallel. Furthermore, in battery module 1, a plurality of batteries 5 electrically connected to positive electrode lead 62d of positive electrode current collector plate 51d, is connected in parallel.

A plurality of batteries 5 connected in parallel using a plurality of positive electrode leads 62b and a plurality of batteries 5 connected in parallel using a plurality of positive electrode leads 62c are connected in series. Also, a plurality of batteries 5 connected in parallel using a plurality of positive electrode leads 62c and a plurality of batteries 5 in parallel using a plurality of positive electrode leads 62d are connected in series. The serial direction corresponds to the Y direction. Current collector main body 61 of all current collector plates 51 and all insulating plates 52 extend in a direction inclined at an acute angle with respect to the orthogonal direction orthogonal to the height direction. Next, a structure for achieving such an electrical connection and an inclined arrangement of current collector plate 51 and insulating plate 52 will be described.

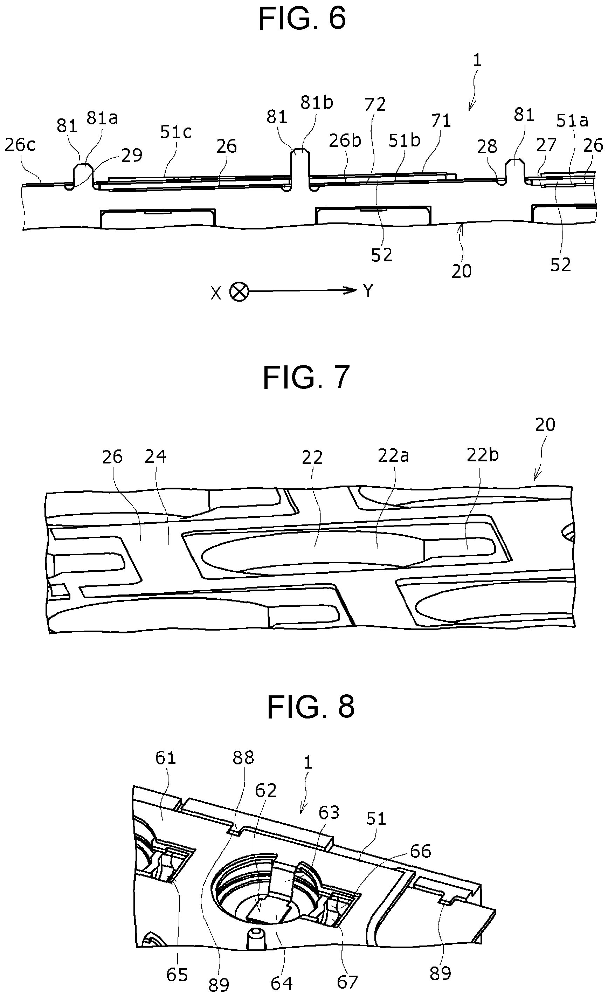

FIG. 6 is a sectional view taken along line A-A of FIG. 5, and is an enlarged sectional view of the periphery of current collector plate mounting surface 24 on upper holder 20 in battery module 1. As shown in FIG. 6, upper holder 20 includes a plurality of inclined surface parts 26 inclined, for example, at an acute angle with respect to the arrangement direction of batteries 5 orthogonal to the height direction, and on which current collector plates 51 are mounted. The plurality of inclined surface parts 26 is arranged as an example in the Y direction, which is the linear direction. Each inclined surface part 26 is displaced upward in the height direction nearer to a first side in the Y direction, and in the example shown in FIG. 6, is displaced to the upper side as it goes to the right side of the paper surface. The inclined surfaces of the plurality of inclined surface parts 26 are substantially parallel.

The plurality of inclined surface parts 26 includes a plurality of inclined surface parts 26b and 26c with substantially the same existence range in the height direction (overlapping each other when seen from the direction in which the plurality of inclined surface parts is arranged). This exemplary embodiment includes two inclined surface parts 26b and 26c whose existence ranges in the height direction are substantially the same. On one inclined surface part (inclined surface part 26c located on the left side in FIG. 6) of the two inclined surface parts 26b and 26c, second intermediate current collector plate 51c is mounted. Furthermore, on the other of two inclined surface parts 26b and 26c (inclined surface part 26b located on the right side in FIG. 6), first intermediate current collector plate 51b is mounted. Two inclined surface parts 26b and 26c adjacent to each other in the Y direction are linked to each other via stepped part 29 with a height. Therefore, the existence ranges in the height direction of the two inclined surface parts 26b and 26c can be the same. By linking the two inclined surface parts 26b and 26c via stepped part 29, the height of battery module 1 can be reduced, and a compact battery module 1 can be achieved.

Regarding the plurality of inclined surface parts 26 disposed in a row, each inclined surface part 26 moves upward in the height direction as it goes to one side in the Y direction (row direction). Furthermore, inclined surface part 26 adjacent to upper end 28 in the height direction of inclined surface part 26 moves upward in the height direction from lower end 27 that is lower than upper end 28 toward one side in the row direction. Furthermore, the length in the Y direction of first intermediate current collector plate 51b is longer than the length in the Y-direction of inclined surface part 26b on which first intermediate current collector plate 51b is mounted, and the length in the Y-direction of second intermediate current collector plate 51c is longer than the length in the Y-direction of inclined surface part 26c on which second intermediate current collector plate 51c is mounted.

Therefore, a part of protruding part 71 protruding from inclined surface part 26c in second intermediate current collector plate 51c can be disposed in a position that overlaps in the height direction with mounting part 72 mounted on inclined surface part 26b of first intermediate current collector plate 51b. Furthermore, gaps with substantially the same length in the height direction regardless of the position in the Y direction can be formed between a part of protruding part 71 and mounting part 72. Insulating plate 52 is disposed in the gaps. In this exemplary embodiment, the plurality of inclined surface parts 26 is substantially parallel. Therefore, by appropriately adjusting the thickness of insulating plate 52, a part of protruding part 71 of second intermediate current collector plate 51c and mounting part 72 can be disposed in close contact with each other through insulating plate 52. By disposing the plurality of current collector plates 51 and plurality of insulating plates 52 in this way, the inclined arrangement of the plurality of current collector plates 51 and the plurality of insulating plates 52 can be achieved. Note here that in the electric power storage module of the present disclosure, insulating plate 52 and current collector plate 51 do not necessarily need to be in close contact with each other, and there may be a gap between insulating plate 52 and current collector plate 51.

As shown in FIG. 6, upper holder 20 includes a plurality of protruding parts 81 protruding toward current collector plate mounting surface 24 in the height direction. The plurality of protruding parts 81 includes a plurality of protruding parts 81a and 81b with different heights in the height direction, and first protruding part 81a and second protruding part 81b higher than protruding part 81a. As shown in FIG. 5 , through holes are provided in current collector plate 51 and insulating plate 52 at positions overlapping protruding parts 81 in the height direction. Protruding parts 81 are inserted through the corresponding through holes. Considering that current collector plate 51 is inclined, the through-hole may have a larger gap between protruding part 81 and the through-hole in the Y direction than the gap between protruding part 81 and the through-hole in the X direction. Protruding part 81 positions at least one of current collector plates 51 and insulating plate 52 through which protruding part 81 passes. As shown in FIG. 6, second protruding part 81b passes through the through holes of the two current collector plates 51 and the through hole of insulating plate 52 sandwiched between two current collector plates 51. After inserting second protruding part 81b into the through holes of two current collector plates 51 and the through hole of insulating plate 52, a tip end protruding from the upper side current collector plate 51 in second protruding part 81b may be melted by hot melting. By doing so, the through-holes of two current collector plates 51 and one insulating plate 52 can be welded and fixed to second protruding part 81b.

FIG. 7 is a perspective view showing a part of current collector plate mounting surface 24 of inclined surface part 26 of upper holder 20. As shown in FIG. 7, battery housing part 22 of upper holder 20 includes, at the upper side, connection port 22a that is a through hole and houses a part of positive electrode lead 62 and exposes the positive electrode terminal of battery 5 from upper holder 20, and connection port 22b that is a through hole communicating with connection port 22a and that houses a part of negative electrode lead 65 (see FIG. 8) and exposes shoulder part 5c of battery 5 from upper holder 20. In this exemplary embodiment, connection port 22b includes an opening that is substantially rectangular seen in the plan view. FIG. 8 is an enlarged perspective view of a part that is located in one side of the X direction and the negative electrode side in the Y direction in the upper side of battery module 1. In current collector plate mounting surface 24, connection ports 22a and 22b are formed in a recess whose opening is substantially rectangular.

As shown in FIG. 8, upper holder 20 includes locking parts 88 including ribs that protrude toward the current collector plate in the height direction. Furthermore, recesses formed by cutting are formed in the respective edges of current collector plate 51 and insulating plate 52. Protruding part 89 of the rib protruding from the edge of upper holder 20 toward current collecting structure 50 is fitted into the recess of current collector plate 15, thereby suppressing rotation of current collector plate 51 and insulating plate 52. As described above, positive electrode lead 62 includes bent part 63 extending from current collector main body 61 toward the battery housing part in the height direction, and joint part 64 extending from a tip end of first bent part 63 toward the positive electrode terminal and being brought into contact with the top surface of the positive electrode terminal. Furthermore, negative electrode lead 65 includes bent part 66 extending from current collector main body 61 toward battery housing part 22 in the height direction, and a tip end of first bent part 66 extending toward the shoulder part in outer covering can of battery 5 and joint part 67 that is brought into contact with the top surface.

FIG. 9 is a schematic sectional view taken along line B-B of FIG. 5. Note here that in FIG. 9, positive electrode leads 62 and negative electrode leads 65 are simply shown as wires in order to clearly show the electrical connection. As shown in FIG. 9, each current collector plate 51 moves upward as it moves toward one side in the Y direction. Also, regarding two current collector plates 51 adjacent to each other in the Y direction, the upper part of one current collector plate 51 and the lower part of the other current collector plate overlap in the height direction.

For each current collector plate 51, a plurality of positive electrode leads 62 is provided on the upper part, and a plurality of negative electrode leads 65 is provided on the lower part. The positive electrode of each battery 5 is electrically connected to positive electrode lead 62 of current collector plate 51 positioned in the upper side, and the negative electrode of each battery 5 is electrically connected to negative electrode lead 65 of current collector plate 51 positioned in the lower side. With this electrical connection structure, the plurality of batteries 5 parallelly connected can be connected in series.

Each current collector plate 51 moves upward as it goes to one side in the Y direction. On the other hand, the plurality of batteries 5 held by upper holder 20 exists at the same height position. Therefore, the height of positive electrode lead 62 varies depending on the position in the Y direction where positive electrode lead 62 exists, and the height of negative electrode lead 65 also varies depending on the position in the Y direction where negative electrode lead 65 exists. Furthermore, positive electrode lead 62 is provided above current collector plate 51, and negative electrode lead 65 is provided below current collector plate 51. Therefore, the height of positive electrode lead 62 is different from the height of negative electrode lead 65. Furthermore, the plurality of positive electrode leads 62 includes two or more positive electrode leads 62 with different heights, and the plurality of negative electrode leads 65 includes two or more negative electrode leads 65 with different heights. Specifically, among positive electrode lead 62 and negative electrode lead 65 arranged in the Y direction, positive electrode lead 62 and negative electrode lead 65 located more distant from battery 5 on current collector plate 51 are longer than positive electrode lead 62 and negative electrode lead 65 located closer to battery 5 on current collector plate 51.

As described above, battery module 1 includes a plurality of batteries 5, current collector plates 51 each connecting the plurality of batteries 5, and upper holder 20 including a part disposed between the plurality of batteries 5 and current collector plates 51. The plurality of batteries 5 is arranged in a direction orthogonal to the height direction of batteries 5. Upper holder 20 includes a plurality of inclined surface parts 26 which is inclined in the arrangement direction and on which current collector plates 51 are mounted. A plurality of inclined surface parts 26 is arranged in a row.

Current battery module 1 includes a plurality of inclined surface parts 26 which is inclined in the arrangement direction perpendicular to the height direction of batteries 5 and on which each current collector plate 51 is mounted, and the plurality of inclined surface parts 26 is arranged as an example. Therefore, the inclined arrangement of current collector plate 51 and insulating plate 52 can be achieved, and the tolerance can be suppressed.

Furthermore, upper holder 20 may include a plurality of battery housing parts 22 each housing the corresponding battery 5.

According to this configuration, upper holder 20 can easily accommodate the plurality of batteries 5.

Furthermore, a plurality of inclined surface parts 26 may overlap each other seen from the direction in which inclined surface parts 26 are arranged, or the inclined surfaces of the plurality of inclined surface parts 26 may be substantially in parallel to each other.

According to this configuration, in a laminated part to which current collector plate 51 is laminated via insulating plate 52, current collector plate 51 and insulating plate 52 may be easily disposed in close contact with each other.

Furthermore, through holes may be formed in current collector plate 51, and a plurality of protruding parts 81 may be provided protruding from a surface near the place where current collector plate 51 is disposed in the height direction and inserted and passing through the through holes.

According to this configuration, current collector plate 51 can be positioned.

Furthermore, a plurality of protruding parts 81 may include two or more protruding parts 81a and 81b whose height in the height directions are different.

According to this configuration, heights of protruding parts 81a and 81b can be varied between a region in which current collector plate 51 and insulating plate 52 are laminated and a region in which a current collector plate is not laminated. Therefore, material cost can be reduced and battery module 1 with good appearance which is stylish and excellent in appearance can be constructed.

Furthermore, recesses formed by notching may be formed in the edge of current collector plate 51. The edge of the upper surface of upper holder 20 may have locking part 88 with a rib including protruding part 89 to be fitted in the recess.

This configuration can prevent current collector plate 51 from rotating.

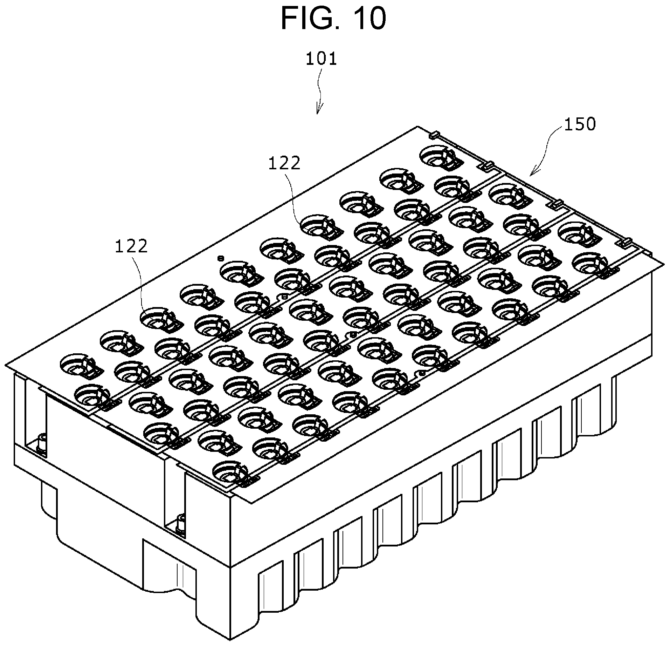

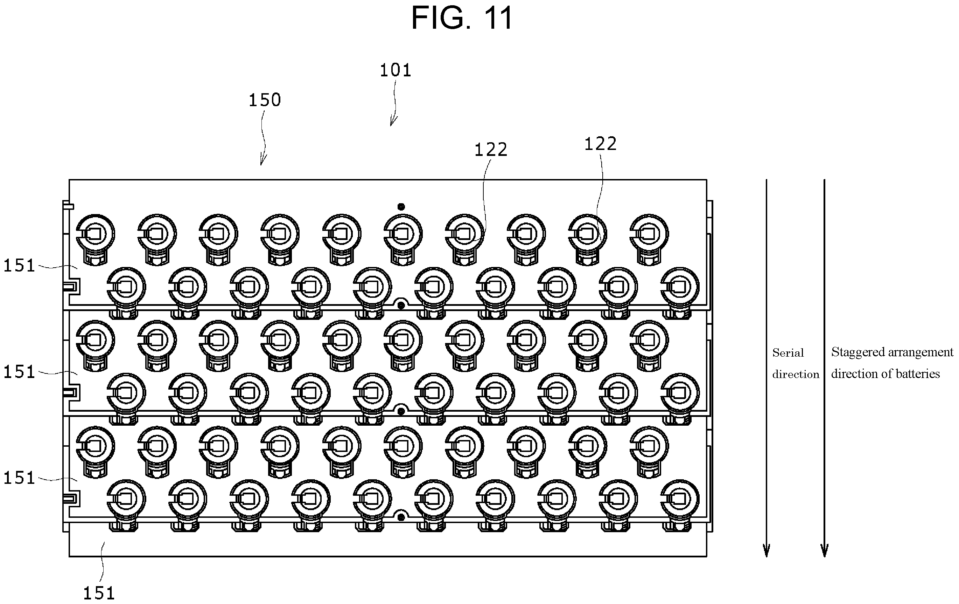

Note here that the present disclosure is not limited to the above-mentioned exemplary embodiments and the modified examples thereof, a variety of modifications and variations can be carried out in the matter described in the claims of the present application and an equivalent scope thereof. For example, in the above exemplary embodiment, as shown in FIG. 5, the case where the serial direction of the plurality of current collector plates 51 and the staggered arrangement direction of battery housing parts 22 are orthogonal in a plan view seen from the height direction is described. However, as shown in battery module 101 of modified examples shown in FIGs. 10 and 11, current collecting structure 150 may have a configuration in which the direction of the series of the plurality of current collector plates 151 coincides with the staggered arrangement direction of battery housing parts 122.

Also, as shown in FIG. 5, the case of connecting a plurality of batteries disposed in a staggered manner in two rows in parallel is described, but a plurality of batteries disposed in a staggered manner in three or more rows may be connected in parallel. Furthermore, although the case of parallelly connecting a plurality of batteries disposed in a staggered manner in a plurality of rows is described, multiple rows of batteries arranged in parallel may be connected in parallel. Furthermore, as shown in FIG. 2, the case where current collecting structure 50 includes two intermediate current collector plates 51b and 51c is described, but the current collecting structure may include three or more intermediate current collector plates. Furthermore, the case where a plurality of positive electrode leads 62 is disposed above inclined intermediate current collector plates 51b and 51c, and a plurality of negative electrode leads 65 is disposed below intermediate current collector plates 51b and 51c is described. However, a plurality of negative electrode leads may be disposed above the inclined intermediate current collector plate, and a plurality of positive electrode leads may be disposed below the intermediate current collector plate.

Also, the case where current collector plate 51 includes leads 62 and 65 formed of a metal piece having a bent part and leads 62 and 65 are connected to the electrodes of battery 5 to collect current is described. However, the current collector plate and the electrode of the battery may be electrically connected by wire bonding. Furthermore, the case where insulating plate 52 is disposed between two current collector plates 51 overlapping each other in the height direction to insulate two current collector plates 51 is described. A plurality of current collector plates disposed obliquely in the resin may be inserted by insert molding so as to form an insulating part between the current collector plates overlapping in the height direction. Furthermore, the case where upper holder 20 includes protruding part 81 protruding in the height direction and current collecting structure 50 is fixed to upper holder 20 using protruding part 81 is described. However, the current collecting structure may be fixed to the upper holder using fastening means or adhesives. Furthermore, the case where the battery holder includes an upper holder and a lower holder, and the insulation member is the upper holder is described. However, the battery holder may be an integral configuration or the battery holder may be an insulation member constituting an integral configuration.

### REFERENCE MARKS IN THE DRAWINGS

1, 101 battery module, 5 battery, 5a positive electrode terminal, 5b outer covering can, 5c shoulder part, 10 lower holder, 20 upper holder, 22, 122 battery housing part, 22a, 22b connection port, 24 current collector plate mounting surface, 26, 26b, 26c inclined surface part, 27 lower end, 28 upper end, 29 stepped part, 50,150 current collecting structure, 51, 151 current collector plate, 51a negative electrode current collector plate, 51b first intermediate current collector plate, 51c second intermediate current collector plate, 51d positive electrode current collector plate, 52 insulating plate, 52a first insulating plate, 52b second insulating plate, 52c third insulating plate, 61 current collector main body 61a negative electrode current collector main body, 61b first current collector main body, 61c second current collector main body, 61d positive electrode current collector main body, 62, 62b, 62c, 62d positive electrode lead, 65, 65a, 65b, 65c negative electrode lead, 65b negative electrode lead, 71 protruding part, 72 mounting part, 81 protruding part, 81a first protruding part, 81b second protruding part, 88 locking part, 89 protruding part.

## Claims

1. An electric power storage module comprising:
a plurality of electric power storage devices;
a current collector plate connecting the plurality of electric power storage devices; and
an insulating member including a part disposed between the plurality of electric power storage devices and the current collector plate,
wherein the plurality of electric power storage devices is arranged in a direction orthogonal to a height direction of the electric power storage devices, and
the insulating member includes a plurality of inclined surface parts which are inclined in an arrangement direction and on which the current collector plate is mounted, and
the plurality of inclined surface parts is
disposed in a row.

2. The electric power storage module according to claim 1, wherein the insulating member includes a plurality of battery housing parts for housing the plurality of electric power storage devices.

3. The electric power storage module according to claim 1 or 2, wherein
the plurality of inclined surface parts overlaps each other seen from a direction in which the inclined surface parts is arranged, and
the plurality of inclined surface parts is substantially in parallel to each other.

4. The electric power storage module according to any one of claim 1 to claim 3, wherein
the current collector plate includes a through hole,
the electric power storage module comprises a plurality of protruding parts protruding from a surface on which the current collector plate are arranged in the height direction and inserted through the through hole.

5. The electric power storage module according to claim 4, wherein
the plurality of protruding parts includes two or more of the protruding parts with different heights in the height direction.

6. The electric power storage module according to any one of claim 1 to claim 5, wherein a recess formed by cutting is formed in the edge of the current collector plate,
the edge of an upper surface of the insulating member includes a locking part including ribs including protruding parts to be fitted into the recess.
